# EUROPEAN PATENT APPLICATION

(11) **EP 3 192 469 A1**
(43) Date of publication of application: **19.07.2017**
(21) Application number: 15839575.6
(22) Date of filing: 10.08.2015
(51) Int. Cl.: A61C 3/14

(54) **TOOTH EXTRACTION FORCEPS**

(30) Priority: 09.09.2014 JP 2014182812
(71) Applicant: YDM Corporation, Tokyo 114-0014 (JP)
(72) Inventor: IIDA, Kenichi, Tokyo 114-0014 (JP); SAKURAI, Nobuhisa, Tokyo 114-0014 (JP)
(74) Representative: Rings, Rolf
(86) International application number: PCT/JP2015/004004
(87) International publication number: WO 2016/038790

(57) **Abstract**

Provided is a tooth extraction forceps which can securely hold a tooth with a smaller force than conventionally required, which can be made smaller and lighter, and which can reduce the number of the tooth extraction forceps that is necessary for treatment. According to the present invention, in the tooth extraction forceps that includes a pair of forceps members 1 pivotally connected by a pivot (2) at a longitudinal middle portion such that gripping portions (3) operated to move toward and away from each other are formed on a base end side of the pivot (2) and clamping portions (5) configured to clamp a tooth by opening and closing due to the gripping portions (3) being operated to move toward and away from each other are formed on a distal side of the pivot (2), a recess (6) is formed on opposing faces of a pair of the clamping portions (5), the recess (6) having a width dimension and a depth dimension from each opposing face reducing progressively from a distal end to the base end side such that an edge (6a) of the recess (6) with respect to each opposing face is formed in a semicircular or semi-elliptic arc shape.

## Description

### Technical Field

The present invention relates to a tooth extraction forceps that is used when extracting a tooth in dental treatment.

### Background Art

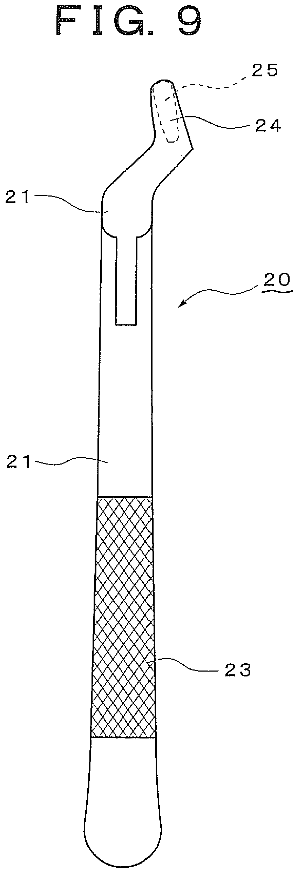

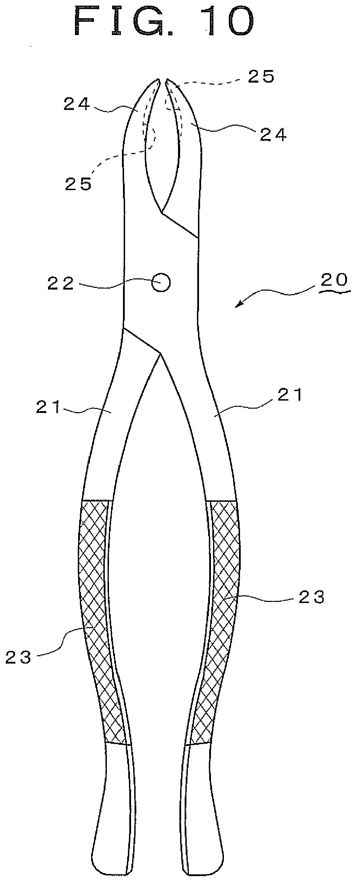

In dental treatment, when performing extraction treatment of a relevant tooth such as due to dental caries, tooth extraction forceps such as those shown in Figures 9 to 11 have generally been used.

The tooth extraction forceps 20 has a pair of forceps members 21 that is pivotally connected by a pivot 22 at a longitudinal middle portion such that gripping portions 23 which are operated by a doctor's hand to move toward and away from each other are formed on a base end side of the pivot 22 and such that clamping portions 24 which open and close due to the above operation of moving the gripping portions 23 toward and away from each other to clamp a tooth are formed on a distal side of the pivot 22.

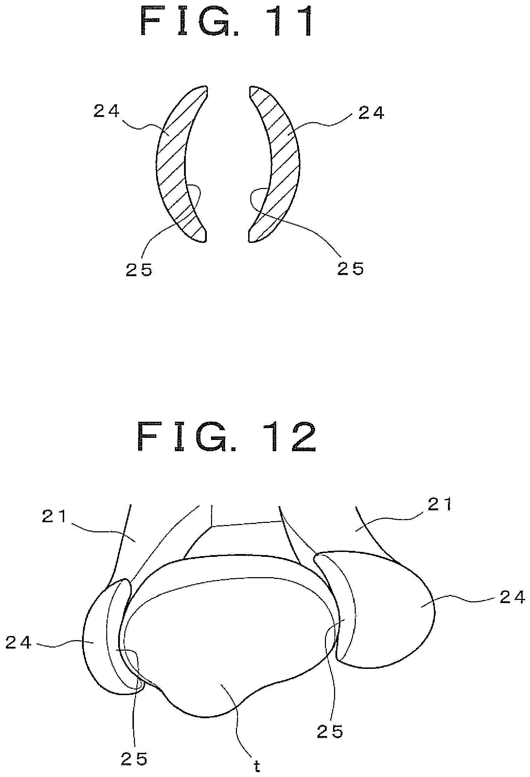

Opposing faces of the pair of the clamping portions 24 are formed by concave arc faces 25 that contact each other at both end parts in a width direction and that form a gap S therebetween in a center part in the width direction. As shown in Figure 12, by gripping the gripping portions 22, a tooth t on which extraction treatment is performed is clamped between the concave arc faces 25 of the clamping portions 24 and the tooth t is extracted by pulling the tooth extraction forceps in an extraction direction.

Thus, the above conventional tooth extraction forceps, as shown in Figure 12, aims to clamp the tooth t by fitting the concave arc faces 25 of the clamping portions 24 to side faces of the tooth t. However, the shape or size of the tooth t varies from patient to patient. Consequently, in a generic tooth extraction forceps, width dimensions of the clamping portions 24 are designed so that the radii of curvature of the concave arc faces 25 are slightly larger than a general tooth.

As a result, clamping the tooth t with the entire surfaces of the concave arc faces 25 is rarely possible due to the variations among patients, and in general, as shown in Figure 12, the tooth t is clamped by opposing support (two-point support) at each of the center parts of the concave arc faces 25 of the clamping portions 24. This configuration makes it difficult to provide a stable hold. Additionally, a strong holding force of the tooth t is required when extracting the same so that the gripping portions 23 need to be gripped with an even stronger force and great effort is required in the treatment.

When the tooth t has lost its shape due to decay (dental caries), it may be difficult to clamp the tooth t with a tooth extraction forceps that has been matched to the tooth t in advance. This may separately require operations such as selecting tooth extraction forceps of different sizes, thus adding extra burden and time in the treatment.

Furthermore, as described above, a conventional teeth extraction forceps aims to clamp the tooth t by fitting the concave arc faces 25 of the clamping portions 24 to the side faces of the tooth t. However, the shapes of human teeth are different for the anterior teeth, premolars and molars in the upper jaw and lower jaw, and thus it is necessary to prepare many types of teeth extracting forceps with width dimensions and radii of curvature of the concave arc faces 25 of the clamping portions being formed to match the different shapes. This unfortunately increases equipment cost.

### Citation List

### Patent Literature

Patent Literature 1: Japanese Patent Laid-Open No. 11-267136

### Summary of Invention

### Technical Problem

In view of the foregoing, the present invention seeks to provide a tooth extraction forceps which can securely hold a tooth with a smaller force than conventionally required, which can be made smaller and lighter, and which can reduce the number of the tooth extraction forceps that is necessary for treatment.

### Solution to Problem

To solve the above problems, the invention according to claim 1 is a tooth extraction forceps that includes a pair of forceps members pivotally connected by a pivot at a longitudinal middle portion such that gripping portions operated to move toward and away from each other are formed on a base end side of the pivot and clamping portions configured to clamp a tooth by opening and closing due to the gripping portions being operated to move toward and away from each other are formed on a distal side of the pivot, the tooth extraction forceps including a recess on opposing faces of a pair of the clamping portions, the recess having a width dimension and a depth dimension from each opposing face reducing progressively from a distal end to the base (proximal) end side such that an edge of the recess with respect to each opposing face is formed in a semicircular or semi-elliptic arc shape.

The invention according to claim 2 is the invention according to claim 1 wherein a plurality of the grooves that extend orthogonally to the longitudinal direction are formed longitudinally spaced on the opposing faces of the clamping portions.

The invention according to claim 3 is the invention according to claim 1 or 2, wherein each of the opposing faces of the clamping portions is formed by a recessed face that runs along a cylindrical face having an axis parallel with an axis of the pivot.

The invention according to claim 4 is the invention according to any one of claims 1 to 3, wherein a width dimension of a distal end of each of the clamping portions is set in a range of 2 mm to 5 mm.

In the inventions according to claims 1 to 4, a width direction refers to a direction orthogonal to the longitudinal direction of the forceps members.

### Advantageous Effects of Invention

In accordance with the invention according to any one of claims 1 to 4, the recess is formed on each of the opposing faces of the pair of the clamping portions, the recess having the width dimension and the depth dimension from the opposing face reducing progressively from the distal end to the base (proximal) end side. Thus, clamping a tooth to be extracted so that the tooth is positioned at each recess causes the edge of the recess that is formed in a semicircular or semi-elliptic arc shape to abut against the tooth at two positions along the width direction of the clamping portions in at least one of the opposing faces.

Consequently, the tooth can be clamped with the pair of the clamping portions from both sides of the tooth by three-point support or four-point support, which are superior in dynamic balance. As a result, the tooth can be held firmly and stably even with a small gripping force. Moreover, since the tooth is supported at two positions along the width direction of the edges of the recesses formed on the opposing faces, the width dimensions of the clamping portions can be made smaller than conventionally possible to reduce size and weight.

Also as a result of being able to securely clamp the tooth by reducing the width dimensions of the clamping portions, even if, for example, the tooth has lost its shape due to decay (dental caries), the tooth can be clamped by at least three-point support with both the clamping portions so that treatment efficiency is improved.

Furthermore, a plurality of types of teeth of different sizes can be clamped with the tooth extraction forceps with one type of width dimension of the pair of clamping portions. Thus, the types and the number of the tooth extraction forceps that should be prepared and provided by a dentist can be reduced so that it is also economical.

In particular, in accordance with the invention according to claim 4, setting the width dimension of the distal end of each of the clamping portions in the range of 2 mm to 5 mm is preferred because this makes it possible to manage with one tooth extraction forceps, eliminating the conventional need to be provided with three to four tooth extraction forceps having different width dimensions.

The teeth have complex and organic three-dimensional shapes, the anterior teeth widening toward the gum whereas the bicuspids and the molars have undercut shapes that narrow nearer the gum. As mentioned above, the teeth may also have lost their shapes due to decay (caries).

In the invention according to claim 2, the plurality of grooves that extend orthogonally to the longitudinal direction are formed longitudinally spaced on the opposing faces of the clamping portions, and thus the complex and organic three-dimensionally-shaped teeth can be securely clamped at opposed locations thereof by a combination of the edges of the recesses and peaks between the grooves. Additionally, the teeth can be clamped strongly with an even smaller gripping force in cooperation with spike effects of the peaks and valleys formed by the grooves.

Furthermore, in accordance with the invention according to claim 3, each of the opposing faces of the clamping portions are formed by the recessed face that runs along the cylindrical face having the axis parallel with the axis of the pivot so that the teeth having undercut shapes that narrow nearer the gum such as the bicuspids (premolars) and the molars can also be smoothly clamped by abutting the distal ends of the clamping portions thereagainst.

### Brief Description of Drawings

[Figure 1] Figure 1 is a side view showing a forceps main body in one embodiment of a tooth extraction forceps according to the present invention.
[Figure 2] Figure 2 is a front view of the above embodiment.
[Figure 3] Figure 3 is an enlarged view of clamping portions shown in Figure 1.
[Figure 4] Figure 4 is a plan view of distal ends shown in Figure 2.
[Figure 5] Figure 5 is a plan view showing the tooth extraction forceps according to the above embodiment clamping a tooth.
[Figure 6A] Figure 6A is a side view showing the tooth extraction forceps according to the above embodiment clamping a first tooth out of three types of teeth.
[Figure 6B] Figure 6B is a side view showing the tooth extraction forceps according to the above embodiment clamping a second tooth out of three types of teeth.
[Figure 6C] Figure 6C is a side view showing the tooth extraction forceps according to the above embodiment clamping a third tooth out of three types of teeth.
[Figure 7] Figure 7 is a side view showing a distal portion indicating another embodiment of the present invention.
[Figure 8] Figure 8 is a side view showing a distal portion indicating yet another embodiment of the present invention.
[Figure 9] Figure 9 is a side view showing a conventional tooth extraction forceps.
[Figure 10] Figure 10 is a front view of Figure 9.
[Figure 11] Figure 11 is a plan view of distal portions shown in Figure 10.
[Figure 12] Figure 12 is a plan view showing the conventional tooth extraction forceps clamping a tooth.

### Description of Embodiments

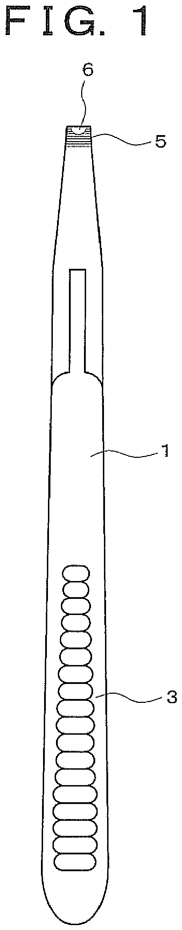

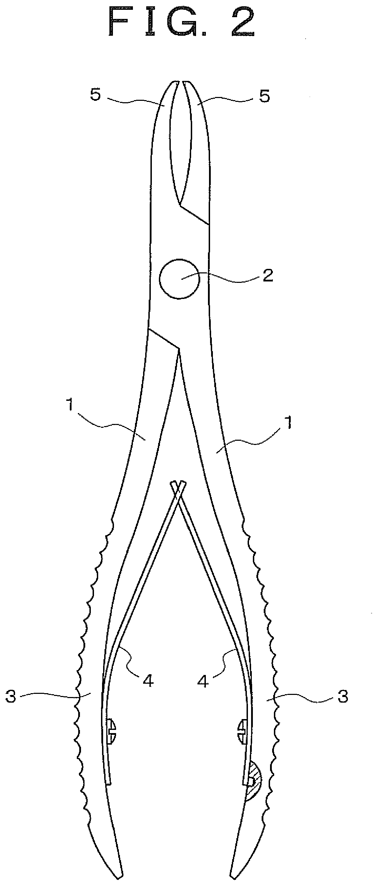

Figures 1 to 4 show one embodiment in which a tooth extraction forceps according to the present invention is applied to a tooth extraction forceps for anterior teeth. This tooth extraction forceps includes a pair of forceps members 1 that is pivotally connected by a pivot 2 at a longitudinal middle portion such that gripping portions 3 which are operated to move toward and away from each other are formed on a base end side of the pivot 2, a leaf spring 4 is disposed between opposing faces of the gripping portions 3 to bias the gripping portions 3 open, and clamping portions 5 which open and close due to the above operation of moving the gripping portions 3 toward and away from each other to clamp a tooth are formed on a distal side of the pivot 2.

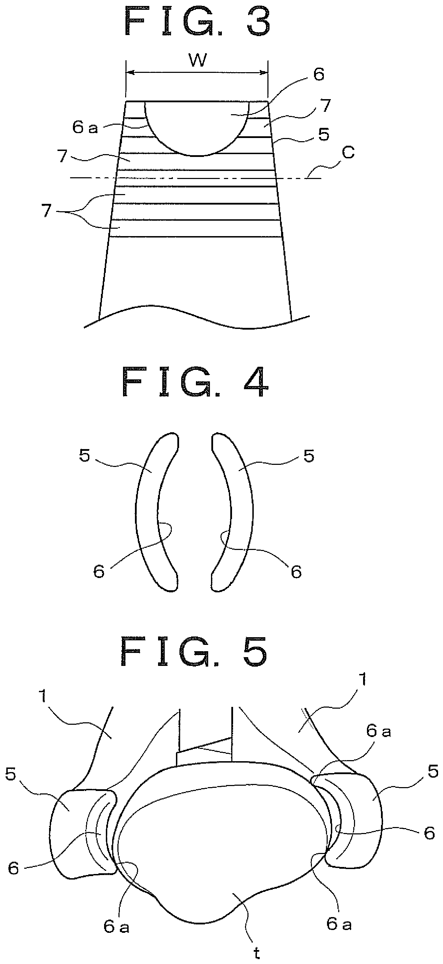

Distal portions of opposing faces of the clamping portions 5 are each formed by a recessed face that runs along a cylindrical face having an axis C (see Figure 3) parallel with an axis of the pivot 2. A width dimension W of a distal end of each of the clamping portions 5 is set in a range of 2 mm to 5 mm.

Each of the opposing faces of the clamping portions 5 has a recess 6 formed thereon that is cut away such that a width dimension and a depth dimension from each opposing face reduce progressively from a distal end to the base end side. An edge 6a of the recess 6 of each opposing face is thus formed in a semicircular arc or a semi-elliptic arc shape.

On the opposing faces of the clamping portions 5 excluding the recesses 6, a plurality of grooves 7 that extend orthogonally to a longitudinal direction of these forceps members 1 are formed at longitudinally spaced intervals.

According to the tooth extraction forceps having the above configuration, each of the opposing faces of the pair of the clamping portions 5 has the recess 6 formed thereon, the recess 6 having the progressively reducing width dimension and depth dimension from the distal end to the base end side. Thus, as shown in Figure 5, clamping a tooth t to be extracted so that the tooth t is positioned at each recess 6 causes the edge 6a of the recess 6 that is formed in a semicircular or semi-elliptic arc shape to abut against the tooth at two positions along a width direction in at least one of the opposing faces of the clamping portions 5.

Consequently, even with a small gripping force, the tooth t can be clamped firmly and stably with the pair of the clamping portions 5 from both sides of the tooth t by three-point support or four-point support (three-point support in Figure 5), which are superior in dynamic balance. Moreover, since the tooth is supported at two positions along the width direction of the edge 6a of the recess 6 formed on each of the opposing faces, the width dimensions of the clamping portions 5 can be made smaller than conventionally possible to reduce size and weight as well as the tooth t being able to be held firmly with a small gripping force.

Also as a result of being able to securely clamp the tooth by reducing the width dimensions of the clamping portions 5, even if, for example, the tooth has lost its shape due to decay (dental caries), the tooth t can be clamped by at least three-point support with both of the clamping portions 5 so that treatment efficiency is improved.

Furthermore, since a plurality of types of teeth of different sizes can be clamped with one type of the tooth extraction forceps, in particular, by setting the width dimension W of the distal end of each of the clamping portions 5 in the range of 2 mm to 5 mm, it is possible to manage with one tooth extraction forceps, eliminating the conventional need to be provided with three to four tooth extraction forceps having different width dimensions. Thus, the types and the number of the tooth extraction forceps that a dentist should be provided with can be reduced so that it is also economical.

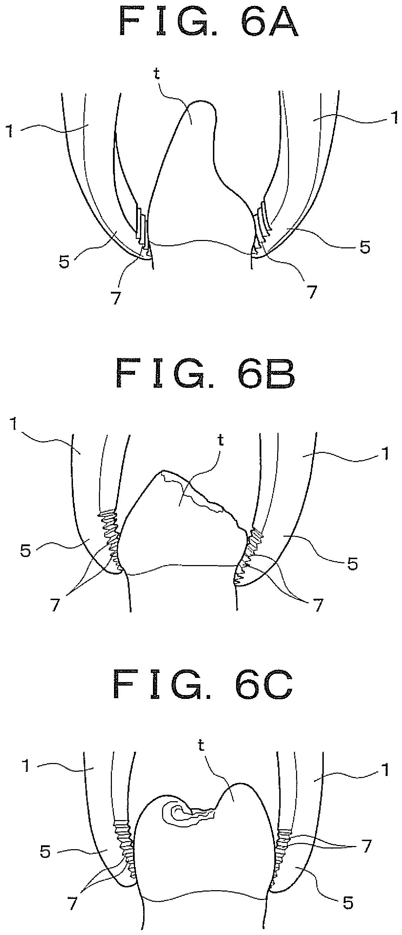

The teeth have complex and organic three-dimensional shapes, the anterior teeth widening toward the gum, as shown in Figure 6A, whereas the bicuspids (premolars) and the molars have undercut shapes that narrow nearer the gum, as shown in Figures 6B and 6C.

In the tooth extraction forceps having the above configuration, each of the opposing faces of the clamping portions 5 is formed by the recessed face that runs along the cylindrical face having the axis C parallel with the axis of the pivot 2 such that the teeth t having undercut shapes that narrow nearer the gum such as the bicuspids (premolars) and the molars, as shown in Figures 6B and 6C, can also be smoothly clamped by abutting the distal ends of the clamping portions 5 thereagainst.

Additionally, the plurality of grooves 7 that extend in the width direction are formed at longitudinally spaced intervals on the opposing faces of the clamping portions 5, and thus by the cooperation between the edge 6a of the recess 6 and peaks between the grooves 7, the complex and organic three-dimensionally-shaped teeth t can be securely clamped at opposed locations thereof and the teeth can be clamped strongly with an even smaller gripping force.

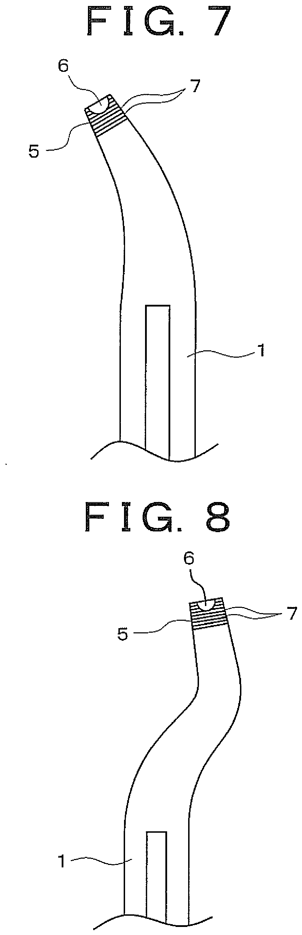

It should be noted that although in the above embodiment, the present invention has been described only in its application to the tooth extraction forceps for the anterior teeth, the present invention is not so limited, and is similarly applicable, for example, to a tooth extraction forceps for the bicuspids as shown in Figure 7 and to a tooth extraction forceps for the molars in the upper jaw as shown in Figure 8.

### Reference Signs List

- 1: Forceps main body
- 2: Pivot
- 3: Gripping portions
- 5: Clamping portions
- 6: Recess
- 6a: Edge
- 7: Grooves
- t: Tooth

### Industrial Applicability

The tooth extraction forceps can securely hold a tooth with a smaller force than conventionally required, can be made smaller and lighter, and can reduce the number of the tooth extraction forceps that are necessary for treatment.

## Claims

1. A tooth extraction forceps comprising a pair of forceps members pivotally connected by a pivot at a longitudinal middle portion such that gripping portions operated to move toward and away from each other are formed on a base end side of the pivot and clamping portions configured to clamp a tooth by opening and closing due to the gripping portions being operated to move toward and away from each other are formed on a distal side of the pivot,
wherein the tooth extraction forceps include a recess on opposing faces of a pair of the clamping portions, the recess having a width dimension and a depth dimension from each opposing face reducing progressively from a distal end to the base end side such that an edge of the recess with respect to each opposing face is formed in a semicircular or semi-elliptic arc shape.

2. The tooth extraction forceps according to claim 1, wherein a plurality of grooves extending orthogonally to the longitudinal direction are formed longitudinally spaced on the opposing faces of the clamping portions.

3. The tooth extraction forceps according to claim 1 or 2, wherein each of the opposing faces of the clamping portions is formed by a recessed face running along a cylindrical face having an axis parallel with an axis of the pivot.

4. The tooth extraction forceps according to any one of claims 1 to 3, wherein a width dimension of a distal end of each of the clamping portions is set in a range of 2 mm to 5 mm.
